# EUROPÄISCHE PATENTSCHRIFT

(11) **EP 2 881 628 B1**
(45) Veröffentlichungstag und Bekanntmachung des Hinweises auf die Patenterteilung: **10.01.2018**
(21) Anmeldenummer: 14192953.9
(22) Anmeldetag: 13.11.2014
(51) Int. Cl.: F16J 15/3296, F16J 15/3228, F16J 15/00

(54) **Wellenlippendichtung und dazugehöriges Dichtsystem für rotierende Wellen**
Rotary shaft lip seal and associated sealing system for rotating shafts
Joint à lèvre d'arbre et système d'étanchéité associé pour des arbres tournant

(30) Priorität: 05.12.2013 DE 102013225052
(43) Veröffentlichungstag der Anmeldung: 10.06.2015
(73) Patentinhaber: NMF Techniek BV, 9608 TB Westerbroek (NL)
(72) Erfinder: Cleveringa, Ru, 9331 CN Norg (NL)
(74) Vertreter: Neigenfink, Jan Cornelius

(56) Entgegenhaltungen:
- EP-A1- 1 182 133
- EP-A1- 2 698 315
- US-A- 5 643 026

## Beschreibung

Die Erfindung betrifft eine Wellenlippendichtung für rotierende Wellen, beispielsweise Antriebswellen von Kraft- oder Arbeitsmaschinen, sowie ein dazugehöriges Dichtsystem.

### Technologischer Hintergrund und Stand der Technik

Die Abdichtung einer rotierenden Welle kann beispielsweise mithilfe einer Wellenlippendichtung erfolgen. Die Welle rotiert mit einer bestimmten Drehzahl um ihre eigene Achse und verläuft dabei durch die beiden voneinander abzudichtenden Räume. Anwendungsgebiete dieses Dichtungstyps umfassen unter anderem Pumpen, Mischer, Rührwerke, Ventilatoren, Getriebe und Walzenstraßen, in denen beispielsweise Medien wie Öl, Dampfanwendungen, Lösungsmittel, Harze, Brennstoffe, Klebstoffe, Lebensmittel und Fette abgedichtet werden müssen.

Bei Wellenlippendichtungen geschieht die Abdichtung durch ein Lippendichtelement, das gegen die rotierende Welle gedrückt wird. Die benötigte Kraft zum Anpressen an die Welle geht insbesondere aus der elastischen Rückstellung des Dichtelements selbst oder aus der Kraft durch den Druck des abzudichtenden Mediums hervor. Die Lippendichtelemente selbst bestehen häufig aus elastomeren Werkstoffen, beispielsweise hydrierter Acrylnitrilbutadien-Kautschuk (HNBR). Zusammen mit verschiedenen Stützringen aus unterschiedlichen metallischen Werkstoffen, beispielsweise Edelstahl, werden die Dichtelemente in einen Aufnahmering, Deckel oder Gehäuse eingesetzt und bilden so ein komplettes Dichtelement, welches sich relativ einfach in den vorgesehenen Bestimmungsort montieren lässt.

Auf der Welle wird in der Regel eine Wellenhülse, zum Beispiel aus Stahl mit einer Wolframkarbid Beschichtung, befestigt, welche dementsprechend mit der gleichen Drehzahl wie die Welle rotiert und die bewegte und abzudichtende Grenzfläche darstellt. Die Wellenhülse hat zum einen eine schützende Funktion für die Welle, da der Verschleiß an der Wellenhülse auftritt und nicht an der Welle, und zum anderen ist sie für eine gute Dichtfunktion notwendig. Gegen diese Wellenhülse dichten die zuvor beschriebenen Dichtelemente ab, die stationär im Gehäuse befestigt sind und daher nicht rotieren. Das Gehäuse wird an die beispielsweise vorhandene Behälterwand des abzudichtenden Fluids geschraubt und gegen diese mit einer statischen Dichtung abgedichtet. Demnach befindet sich der primäre (dynamische) Dichtspalt genau an der Stelle, an der sich die Wellenhülse und die Dichtelemente berühren. Das abzudichtende Fluid kann bis zur ersten Dichtlippe vordringen und wird durch das Lippendichtelement und den Dichtspalt am Durchtritt gehindert. Je nach Anwendungsfall werden verschiedene Lippengeometrien verwendet bzw. die Lippendichtelemente anders angeordnet. Die Lippendichtelemente werden zumeist mittels rotationssymmetrischer, metallischer Stützteile in einer funktionsgerechten Einbaulage gehalten.

Wellenlippendichtungen besitzen den Vorteil, in einer großen Bandbreite Mediendrücken (bis zu 150 bar) von Flüssigkeiten und Gasen widerstehen zu können, wobei sie eine lange Lebensdauer erreichen können.

Nachfolgend soll auf einige Beispiele gefundenen Standes der Technik näher eingegangen werden.

So ist nach EP 1 227 271 A1 eine Hochdruck-Wellenlippendichtung und ein Verfahren zur Herstellung der Dichtheit zwischen einem Gehäuse mit einem unter Hochdruck stehenden Gas und einer in das Gehäuse führenden Welle beschrieben. Die aus Nylon oder einem Polymer bestehende Dichtung ist an einen Stützkörper angelegt und es befindet sich auf der Seite, von welcher das hochgespannte Gas auf die Lippendichtung einwirkt, eine aus festen Elementen gebildete Gasbarriere. Aufgrund des anliegenden hohen Druckes 4 MPa bis 12 MPa und des harten nicht-elastomeren Polymermaterials der Lippendichtung werden Einlaufspuren auf einer Welle hinterlassen.

Nach DE 195 09 771 C1 wird eine Dichtung zum Einfügen in den radialen Zwischenraum zwischen zwei einander koaxial umschließende, relativ bewegliche Zylinderflächen vorgeschlagen. Der Dichtring liegt hier mit mechanischer Vorspannung an einer Gehäuseinnenfläche an, wobei eine Dichtlippe an letztere angedrückt ist, und es drückt eine zweite Dichtung gegen ein zweites Maschinenteil (eine sich drehende Welle) über einen Drehpunkt an das zweite Maschinenteil, das hier eine Welle ist. Zur Vermeidung eines Unterdrucks im abzudichtenden Raum besitzt der Dichtring Entlastungsnuten zur Innenbelüftung.

In DE 199 21 211 A1 ist eine Dichtungsanordnung für eine in einem Gehäuse gelagerten Welle mit weiterem Drehzahlbereich genannt. Sie besitzt einen in der Gehäusebohrung angebrachten Radialwellendichtring für die Abdichtung des Wellenlagerraumes gegen Schmiermittelverlust und ein mit der Welle verbundenes Schleuderblech mit einer radial nach innen gerichteten Lippendichtung, die unter Fliehkrafteinwirkung bei höheren Drehzahlen der Welle von ihrer Dichtfläche abhebt, um Schäden durch erhöhte Reibung zu vermeiden. Eine Primärdichtlippe mit weiteren radialen Schutzlippen bildet einen rotationssymmetrischen Lippenteil aus polymerem Werkstoff.

Einige Dichtungssysteme im Bereich von Antriebssträngen bei Schiffen werden in der US 5 643 026 A, der EP 1 182 133 A1 und der EP 2 698 315 A1 beschrieben.

Mit DE 39 19 474 A1 wird schließlich eine schwimmende Lippendichtung mit verstärktem flexiblen Abschnitt vorgestellt. Sie betrifft eine ringförmige Wellendichtung mit einer kontinuierlichen Lippendichtung zum Abdichten gegen Öl-Fluss zwischen einer Bohrung und einer Welle, die sich durch die Bohrung erstreckt. Die Dichtung hat einen wellenförmigen elastomeren Abschnitt, welcher das Dichtungselement mit einem stabilen festen Stützteil verbindet.

Die konkret vorgestellten technischen Lösungen besitzen, im Einzelnen betrachtet, jeweils für den jeweiligen Einsatzzweck ihre Berechtigung. Sie vermögen es allerdings nicht, einen Weg aufzuzeigen, der es möglich macht, einen sich abzeichnenden Dichtungsschaden in einem aus mehreren Lippendichtungen bestehenden Dichtungssystem, frühzeitig anzuzeigen, sodass eine vorbeugende Instandsetzung geplant werden kann.

### Zusammenfassung der Erfindung

Mit Hilfe der erfindungsgemäßen Wellenlippendichtung für eine rotierende Welle, insbesondere eine Antriebswelle in Kraft- oder Arbeitsmaschinen, können ein oder mehrere Nachteile des Standes der Technik behoben oder zumindest gemindert werden. Es wird eine erfindungsgemäße Wellenlippendichtung gemäß Anspruch 1 vorgeschlagen. Der Erfindung liegt die Erkenntnis zugrunde, dass mittels einer Wellenlippendichtung, die eine Mehrfachanordnung von Dichtlippen sowie einen in besonderer Weise ausgestatteten Stützkörper beinhaltet, eine besonders zuverlässige Überwachung des Dichtungssystems möglich ist. Die Wellenlippendichtung umfasst dabei eine Anordnung von mindestens fünf Dichtlippen, die bezogen auf die Rotationsachse der Welle verschieden ausgerichtet sind. Die beiden am weitesten außen in der Mehrfachanordnung befindlichen Dichtlippen weisen dabei in entgegengesetzte Richtungen, derart dass sie gegenüber dem dort angrenzenden Dichtmedium ihre Dichtfunktion wahrnehmen können. Zwischen diesen beiden äußeren Dichtlippen sind ferner mindestens drei weitere Dichtlippen angeordnet, die in dieselbe Richtung weisen. Insgesamt stehen damit mindestens vier Dichtlippen mit gleicher Ausrichtung gegenüber dem abzudichtenden Dichtmedium zur Verfügung. Konkret wird bei einer Kraft- oder Arbeitsmaschine die Wellenlippendichtung so ausgelegt sein, dass mindestens vier Dichtlippen gegenüber dem Betriebsmedium der Kraft- oder Arbeitsmaschine, in der Regel Öl oder dergleichen, dichtend ausgelegt sind. Die zumindest eine außen liegende Dichtlippe mit gegenläufiger Ausrichtung dichtet dann gegenüber der Umgebung ab.

Die erfindungsgemäße Wellenlippendichtung weist ferner zumindest zwei scheibenförmigen Stützkörper auf, die zwischen den Dichtlippen angeordnet sind. Die konkrete Lage des Stützkörpers wird nun so vorgegeben, dass sich ausgehend von seiner relativen Position innerhalb der Dichtlippenanordnung in Medienrichtung zumindest noch drei Dichtlippen mit gleicher axialer Ausrichtung anschließen. In der entgegengesetzten Richtung befindet sich demnach noch mindestens eine Dichtlippe mit gleicher axialer Ausrichtung. Die Anordnung umfasst mehr als drei Dichtlippen gleicher axialer Ausrichtung, und mehrere Stützkörper werden an den vorgenannten Kriterien entsprechenden Positionen zwischen die Dichtlippen eingebracht. Jeder Stützkörper kann mehrere Funktionen übernehmen. In der Regel dient er dazu, benachbarte Dichtlippen auf Abstand zu halten und zu stützen. Für die erfindungsgemäßen Zwecke bedeutsam ist jedoch eine Kontrollbohrung, deren erste Öffnung der Welle zugewandt ist und deren zweite Öffnung auf einer der Welle abgewandten Seite des Stützköpers liegt. Mit anderen Worten, das Stützteil ist so ausgelegt, dass sich zur Welle gewandt noch ein Messraum ergibt, der über die Kontrollbohrung von außen zugänglich ist. Über diese Kontrollbohrung ist es demnach möglich, Informationen zu den Druckverhältnissen, Temperatur oder über die Zusammensetzung der Atmosphäre im Messraum zu erhalten.

Ein weiterer Aspekt der Erfindung betrifft daher ein Dichtsystem, das die vorgenannte Wellenlippendichtung sowie Messeinrichtungen umfasst, die ausgelegt ist, eine Änderung von Druck, Temperatur und/oder der Zusammensetzung der Atmosphäre in der Kontrollbohrung zu erfassen und damit einen Dichtigkeitszustand der Wellenlippendichtung zu überwachen. Jede Messeinrichtung schließt sich unmittelbar an die Kontrollbohrung an oder steht mit ihr über weitere mit der Kontrollbohrung kommunizierende Kanäle (zum Beispiel Gehäusekanäle einer Kraft- oder Arbeitsmaschine) in Kontakt. Mithilfe der Messeinrichtung kann demnach eine Aussage über die Druckverhältnisse, die Temperatur oder die Zusammensetzung der Atmosphäre im Messraum zwischen zwei Dichtlippen getroffen werden. Ist die Dichtfunktion der ersten beiden Dichtlippen mit gleicher axialer Ausrichtung gegenüber dem Dichtmedium beeinträchtigt, so ändern sich Druck, Temperatur und/oder Atmosphärenzusammensetzung in dem nachgeordneten Messraum signifikant. Da sich aber zumindest noch eine weitere Dichtlippe mit gleicher axialer Ausrichtung anschließt, ist sichergestellt, dass noch eine rechtzeitige Wartung möglich ist, ohne dass zum Beispiel Öl oder dergleichen die gesamte Wellenlippendichtung durchdringen kann. Die Wellenlippendichtung umfasst mehr als drei Dichtlippen gleicher axialer Ausrichtung und mehr als einen Stützkörper, so kann beispielsweise ein differenzierter Wartungsplan erstellt werden, bei dem die Dichtigkeitsverhältnisse in den jeweiligen Messräumen der Stützkörper mit einfließen. Eine akute Wartung ist dann beispielsweise nur notwendig, wenn in allen Messräumen ein signifikanter Druckanstieg zu verzeichnen ist. Wird beispielsweise nur im vorderen Messraum ein Druckanstieg wahrgenommen, so kann eine routinemäßige Instandsetzung initiiert werden. Auf diese Weise lassen sich die Laufzeiten und Wartungsintervalle von Kraft- oder Arbeitsmaschinen wesentlich flexibler und an die jeweiligen tatsächlichen Erfordernisse angepasst gestalten.

Die Dichtlippen bestehen in der Regel aus einem verschleißbeständigen elastomeren Material. Geometrie und Materialwahl sind jedoch für die Zwecke der Erfindung nicht maßgeblich, sondern können den jeweiligen Gegebenheiten frei angepasst werden. Jeder Stützkörper besteht in der Regel aus einem metallischen Werkstoff. Jeder Stützkörper ist derart ausgelegt, dass er ausreichend von der Welle beabstandet ist und sich ein dementsprechend dimensionierter Messraum ergibt, in dem die Kontrollbohrung mündet. Vorzugsweise ist jeder Stützkörper 0,1 bis 15 mm von der Welle beabstandet.

Das Vorsehen der Kontrollbohrung hat demnach den Vorteil, dass ein, auch bei bester kontinuierlicher Schmierung, mechanisch bedingtes Verschleißen der auf der Oberfläche einer Antriebswelle gleitenden Dichtlippe eines Lippendichtelements frühzeitig angekündigt wird, denn es wird beispielsweise der sich vor einem noch intakten Lippendichtelement aufbauende Mediendruck eines Fluids genutzt, um über eine Druckmesseinrichtung den Zeitpunkt zu bestimmen, an dem eine vorbeugende Instandhaltungsmaßnahme vor Eintreten einer Havarie angezeigt ist.

Das erfindungsgemäß gestaltete Dichtsystem ist durch die baukastenartige Zusammenstellung der Lippendichtelemente besonders dazu geeignet, individuell abgestimmte Dichtsysteme für Mediendrücke bis zu 150 bar bereitzustellen.

Weitere bevorzugte Ausgestaltungen der Erfindung lassen sich den Ansprüchen beziehungsweise der nachfolgenden Beschreibung entnehmen.

### Kurzbeschreibung der Figuren

Die Erfindung wird nachfolgend anhand von Ausführungsbeispielen und dazugehörigen Zeichnungen näher erläutert. Es zeigen:
- Figur 1: eine Wellenlippendichtung gemäß einer (nicht beanspruchten) ersten Ausführungsform; und
- Figur 2: eine erfindungsgemäße Wellenlippendichtung gemäß einer (beanspruchten) zweiten Ausführungsform.

### Detaillierte Beschreibung der Erfindung

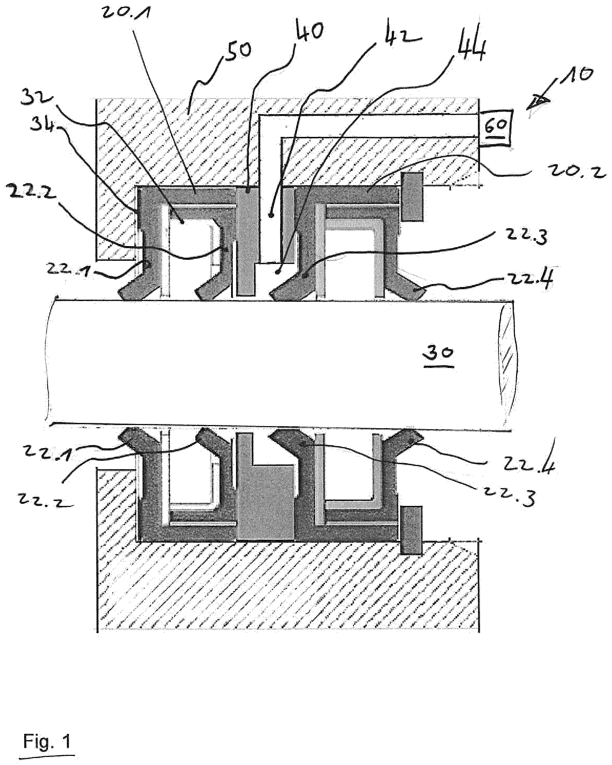

Figur 1 zeigt eine Schnittansicht durch eine Wellenlippendichtung 10 nach einer (nicht beanspruchten) ersten Ausführungsvariante. Die Wellenlippendichtung 10 umfasst zwei als Doppellippendichtung ausgeführte Lippendichtelemente 20.1 und 20.2, die aus einem Elastomer, beispielsweise HNBR, bestehen können. Das in der Figur 1 links angeordnete Lippendichtelement 20.1 weist zwei Dichtlippen 22.1 und 22.2 auf, die in die gleiche axiale Richtung, die durch die Drehachse der abzudichtenden rotierenden Welle 30 vorgegeben ist, zeigen. Das zweite Lippendichtelement 20.2 besitzt ebenfalls zwei Dichtlippen 22.3 und 22.4, deren axiale Ausrichtung jedoch zueinander gegenläufig ist. Insgesamt umfasst die dargestellte Ausführungsform demnach drei aufeinanderfolgend angeordnete Dichtlippen 22.1 bis 22.3 mit gleicher axialer Ausrichtung sowie eine Dichtlippe 22.4 mit gegenläufiger axialer Ausrichtung. Die drei Dichtlippen 22.1 bis 22.3 sind in der Regel dem Innern der Kraft- oder Arbeitsmaschine zugewandt, deren Welle 30 abgedichtet werden soll. Das entsprechende Dichtmedium, beispielsweise Öl, liegt also zunächst an dem äußeren Lippendichtelement 20.1 an und drückt die Dichtlippe 22.1 dichtend gegen die Welle 30.

Auf der rechten Seite weist das Lippendichtelement 20.2 der Wellenlippendichtung 10 eine Dichtlippe 22.4 auf, die nach außen weist. Auf diese Weise wird die Welle 30 gegenüber dem rechts von der Wellenlippendichtung 10 befindlichen Medium, beispielsweise Umgebungsluft, abgedichtet. In dem vorliegenden Ausführungsbeispiel sind jeweils zwei Dichtlippen 22.1 und 22.2 beziehungsweise 22.3 und 22.4 zu einem sogenannten Doppellippendichtelement zusammengefasst, was konstruktiv besonders einfach realisierbar ist, aber nicht für die Zwecke der Erfindung zwingend notwendig ist. Zur mechanischen Stabilisierung der Lippendichtelemente 20.1 und 20.2 können weitere Stützteile in die Wellenlippendichtung 10 eingebracht werden, diese umfassen beispielsweise die scheibenförmigen Stützelemente 32 und 34.

Die Wellenlippendichtung 10 ist stationär in einer Gehäusewandung 50 der Kraft- oder Arbeitsmaschine untergebracht.

Ferner weist die Wellenlippendichtung 10 einen Stützkörper 40 auf, der zwischen der zweiten und dritten Dichtlippe 22.2 und 22.3 angeordnet ist. Der Stützkörper 40 stützt zum einen die zweite Dichtlippe 22.2 ab und zum anderen hält er die beiden Dichtlippen 22.2 und 22.3 auf einem definierten Abstand. Weiterhin weist der Stützkörper 40 eine Kontrollbohrung 42 auf, deren Eingangsöffnung der Welle 30 zugewandt ist und deren Ausgangsöffnung sich auf einer der Welle 30 gegenüberliegenden Seite befindet. Der Stützkörper 40 ist dabei so dimensioniert, dass sich ein Messraum 44 zwischen der Welle 30 und dem Stützkörper 40 ergibt, in dem die Kontrollbohrung 42 mündet. Der Messraum 44 kommuniziert nun über die Kontrollbohrung 42 und einen sich im Gehäuse 50 anschließenden Messkanal mit einer Druckmesseinrichtung 60. Mit anderen Worten, über die Druckmesseinrichtung 60 lassen sich die Druckverhältnisse im Messraum 44 überwachen, und eine Undichtigkeit der Dichtlippen 22.1 und 22.2 kann auf diese Weise erfasst werden, ohne dass die gesamte Wellenlippendichtung 10 undicht wird, denn nach wie vor ist die Dichtlippe 22.3 intakt. Anstelle oder ergänzend zur Druckmesseinrichtung kann die Temperatur und/oder die Zusammensetzung der Atmosphäre in der Kontrollbohrung 42 mittels geeigneter Messeinrichtungen überwacht werden.

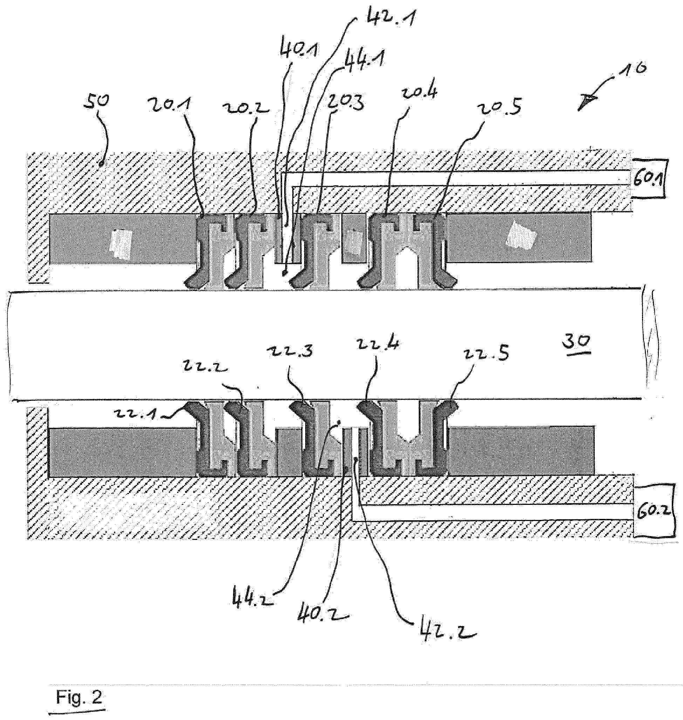

Der Figur 2 ist eine (beanspruchte) weitere Ausführungsform der erfindungsgemäßen Wellenlippendichtung 10 zu entnehmen. Im Unterschied zu der Ausführungsform gemäß Figur 1 weist die Wellenlippendichtung 10 nunmehr insgesamt fünf Lippendichtelemente 20.1 bis 20.5 auf. Die von links gesehen ersten vier Lippendichtelemente 20.1 bis 20.4 haben bezüglich der Ausrichtung ihrer Dichtlippen 22.1 bis 22.4 die gleiche Orientierung. Zwischen dem zweiten und dritten Lippendichtelement 20.2 und 20.3 sowie zwischen dem dritten und vierten Lippendichtelement 20.3 und 20.4 sind Stützkörper 40.1 und 40.2 angeordnet. Die Ausgestaltung der Lippendichtelemente 20.1 bis 20.5 sowie der Stützkörper 40.1 und 40.2 kann analog der Ausgestaltung der Ausführungsform gemäß Figur 1 erfolgen, sodass an dieser Stelle hierauf nicht näher eingegangen wird.

Mittels der in dieser Ausführungsvariante der Wellenlippendichtung 10 vorhandenen zwei Stützkörper 40.1, 40.2 können die Druckverhältnisse in zwei aufeinanderfolgenden Messräumen 44.1 und 44.2 überwacht werden. Der erste Messraum 44.1 kommuniziert dabei über eine Kontrollbohrung 42.1 mit einer ersten Druckmesseinrichtung 60.1. Der zweite Messraum 44.2 kommuniziert über eine Kontrollbohrung 42.2 mit einer zweiten Druckmesseinrichtung 60.2. Demnach können die beiden Messräume 44.1 und 44.2 unabhängig voneinander hinsichtlich einer Änderung der Druckverhältnisse überwacht werden. So kann beispielsweise eine sofortige Erneuerung der Wellenlippendichtung 10 erst dann initiiert werden, wenn beide Druckmesseinrichtungen 60.1 und 60.2 einen signifikanten Druckanstieg verzeichnen. Wird dagegen nur ein Druckanstieg in der ersten Druckmesseinrichtung 60.1 registriert, so kann eine routinemäßige Wartung eingeleitet werden, für die es beispielsweise nicht notwendig ist, dass die Kraft- oder Arbeitsmaschine sofort abgestellt wird.

## Patentansprüche

1. Wellenlippendichtung (10) für eine rotierende Welle (30), umfassend eine Anordnung von mindestens fünf Dichtlippen (22.1 ... 22.5), wobei mindestens vier Dichtlippen die gleiche axiale Ausrichtung besitzen und die beiden in der Anordnung jeweils außen sitzenden Dichtlippen nach außen weisen,
wenigstens zwei scheibenförmige Stützkörper (40.1, 40.2) derart zwischen den Dichtlippen gleicher axialer Ausrichtung angeordnet sind, dass sich zwischen der außen sitzenden Dichtlippe (22.1) und den wenigstens zwei Stützkörpern (40.1, 40.2) noch mindestens eine weitere Dichtlippe (22.2) befindet, wobei sich zwischen den wenigstens zwei scheibenförmigen Stützkörpern (40.1, 40.2) wenigstens eine Dichtlippe befindet,
wobei jeder der wenigstens zwei Stützkörper (40.1, 40.2) eine jeweilige Kontrollbohrung (42.1, 42.2) aufweist, die jeweils eingangsseitig an einer der Welle (30) zugewandten Seite ansetzt und ausgangsseitig an einer der Welle (30) abgewandten Seite endet, so dass sich zur Welle (30) gewandt wenigstens zwei Messräume (44.1, 44.2) ergeben, die allein über die jeweilige Kontrollbohrung ( 42.1, 42.2) von außen zugänglich sind, und
die Wellenlippendichtung (10) wenigstens zwei Messeinrichtungen (60.1, 60.2) umfasst, die ausgelegt sind über die jeweilige Kontrollbohrung (42, 42.1, 42.2) eine Änderung des Drucks, der Temperatur oder der Zusammensetzung der Atmosphäre in den jeweiligen wenigstens zwei Messräumen (44.1, 44.2) zu erfassen.

## Claims

1. A rotary shaft lip seal (10) for a rotating shaft (30) comprising an arrangement of at least five sealing lips (22.1 ... 22.5), wherein at least four sealing lips have the same axial orientation and the two respective outer sealing lips of the arrangement are directed outward,
wherein at least two disk-shaped support members (40.1, 40.2) are arranged between the sealing lips with the same axial orientation in such a way that at least one additional sealing lip (22.2) is located between the outer sealing lip (22.1) and the at least two support members (40.1, 40.2), wherein at least one sealing lip is located between the at least two disk-shaped support members (40.1, 40.2),
wherein each of the at least two support members (40.1, 40.2) features a control bore (42.1, 42.2), which respectively begins on a side facing the shaft (30) and ends on a side facing away from the shaft (30), such that at least two measuring chambers (44.1, 44.2) facing the shaft (30) are formed and only accessible through the respective control bore (42.1, 42.2), and
wherein the rotary shaft lip seal (10) comprises at least two measuring devices (60.1, 60.2), which are designed for detecting a change of the pressure, the temperature or the composition of the atmosphere in the at least two respective measuring chambers (44.1, 44.2) through the respective control bore (42, 42.1, 42.2).

## Revendications

1. Joint d'étanchéité d'arbre (10) pour arbre tournant (30), comprenant un dispositif composé d'au moins cinq lèvres d'étanchéité (22.1 ... 22.5), dans lequel au moins quatre lèvres d'étanchéité possèdent la même orientation axiale et les deux lèvres d'étanchéité situées respectivement à l'extérieur dans le dispositif sont dirigées vers l'extérieur,
au moins deux corps d'appui en forme de disques (40.1, 40.2) sont disposés entre les lèvres d'étanchéité à même orientation axiale de manière à ce que, entre la lèvre d'étanchéité située à l'extérieur (22.1) et les au moins deux corps d'appui (40.1, 40.2), se trouve aussi au moins une autre lèvre d'étanchéité (22.2), au moins une lèvre d'étanchéité se trouvant entre les au moins deux corps d'appui en forme de disques (40.1, 40.2),
chacun des au moins deux corps d'appui (40.1, 40.2) présentant un trou de contrôle respectif (42.1, 42.2) qui est pratiqué respectivement à l'entrée au niveau d'une face tournée vers l'arbre (30) et à la sortie au niveau d'une face détournée de l'arbre (30), de sorte qu'on obtient au moins deux espaces de mesure (44.1, 44.2) tournés vers l'arbre (30), qui sont accessibles de l'extérieur seulement par le trou de contrôle respectif (42.1, 42.2),
le joint d'étanchéité à lèvre (10) comprenant au moins deux dispositifs de mesure (60.1, 60.2) qui sont conçus, par le biais du trou de contrôle respectif (42, 42.1, 42.2), pour détecter une modification de la pression, de la température ou de la composition de l'atmosphère dans les au moins deux espaces de mesure respectifs (44.1, 44.2).
